(19) Europäisches Patentamt

European Patent Office

Office européen des brevets

(11) **EP 1 484 851 A1**

(12) **EUROPEAN PATENT APPLICATION**

(43) Date of publication:
**08.12.2004 Bulletin 2004/50**

(51) Int Cl.7: **H04B 10/00**, G02F 1/01, G02F 1/09

(21) Application number: **04012397.8**

(22) Date of filing: **26.05.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **06.06.2003 JP 2003162265**

(71) Applicant: **FUJITSU LIMITED**
**Kawasaki-shi, Kanagawa 211-8588 (JP)**

(72) Inventors:
• **Iwata, Hiroyuki**
**Fujitsu Microelectronics Solutions**
**Kohoku-ku Yokohama-shi Kanagawa 222-0033 (JP)**

• **Nabeyama, Yoshio**
**Fujitsu Network Technologies Ltd.**
**Kohoku-ku Yokohama-shi Kanagawa 222-0033 (JP)**
• **Oikawa, Hiroshi**
**Kawasaki-shi, Kanagawa 211-8588 (JP)**

(74) Representative: **Kreutzer, Ulrich, Dipl.-Phys. et al**
**Cabinet Beau de Loménie,**
**Bavariaring 26**
**80336 Munich (DE)**

(54) **Faraday variable optical attenuator and optical transmitter including it**

(57)     An optical transmitter (1A) including a variable optical attenuator (11A) and a controller (12A). The variable optical attenuator attenuates a light to be transmitted from the optical transmitter in accordance with a drive current of the attenuator. The attenuator has an attenuation versus drive current characteristic curve with a peak so that attenuation increases with increasing drive current on a side of the peak ascending to the peak and attenuation decreases with increasing drive current at an opposite side of the peak descending from the peak. The controller monitors the attenuated light and controls the drive current to maintain an attenuation amount near the peak. The attenuator is, for example, a Faraday rotator.

FIG. 4

**Description**

CROSS-REFERENCE TO RELATED APPLICATIONS

This application claims foreign priority to Japanese application 2003-162265 filed June 6, 2003, and which is incorporated herein by reference.

BACKGROUND OF THE INVENTION

1. Field of the Invention

The present invention relates to a signal light transmitter to be used for an optical transmission system.

2. Description of the Related Art

Demand for transmission capacity of information is increasing rapidly. Accordingly, it is necessary to form large capacity, flexible networks based on optical transmission.

Wavelength division multiplexing (WDM) optical transmission is widely employed to provide such large capacity, flexible networks. In WDM transmission, transmission capacity is increased by multiplexing a plurality of signal lights of different wavelengths into a WDM signal light, and simultaneously transmitting the plurality of signals as the WDM signal light through a single optical fiber as a transmission line.

More specifically, as an example, a WDM transmission terminal of a WDM optical transmission system modulates a plurality of lights of different wavelengths with signals of respective channels, and then multiplexes the modulated lights into a WDM signal light. The transmission terminal then transmits the WDM signal light through a single optical fiber as a transmission line.

However, characteristics of the transmission line and characteristics of devices such as optical amplifiers used in WDM optical communication systems are not uniform for all wavelengths. Therefore, to help compensate for such characteristics, a single wavelength signal light transmitter including in a WDM transmission terminal is often required to vary intensity of output signal light in order to provide pre-emphasis. Pre-emphasis can help attain uniform optical signal-to-noise ratio (OSNR) in a receiving terminal.

Moreover, a WDM transmission terminal can be provided with a redundant structure which can quickly restart communication after transmission of signal light is interrupted due to, for example, failure in a light source. Such redundant structures include the use of working/protection (W/P) systems when can switch within a short period of time such as, for example, within 10 ms.

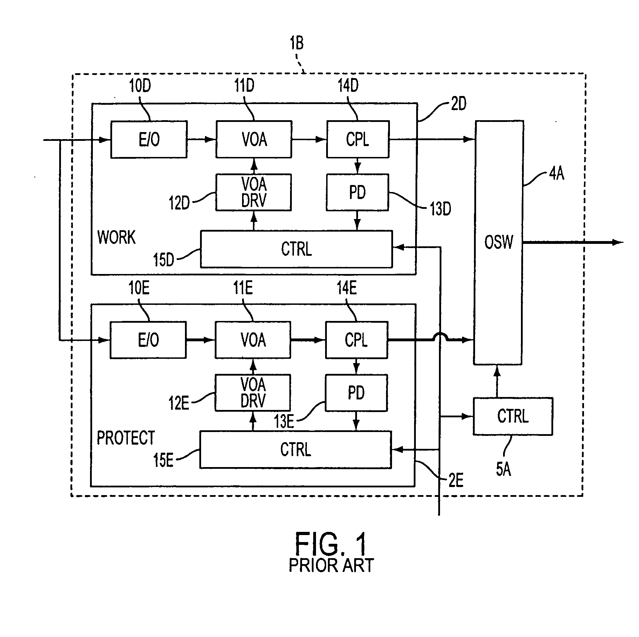

FIG. 1 illustrates a conventional single wavelength signal light transmitter for transmitting the signal light of one channel. The single wavelength signal light transmitter 1 B of FIG. 1 is composed of a working transponder 2D, a protection transponder 2E, an optical switch (OSW) 4A and a control unit 5A.

The working transponder 2D is composed of an electric to optical conversion (E/O) unit 10D, a variable optical attenuator (VOA) 11D, a variable optical attenuator drive (VOA DRV) unit 12D for driving the variable optical attenuator, a photodiode (PD) 13D for monitoring intensity of output light branched by a coupler (CPL) 14D, and a control (CTRL) unit 15D.

Similarly, the protection transponder 2E is composed of an electric to optical conversion (E/O) unit 10E, a variable optical attenuator (VOA) 11E, a variable optical attenuator drive (VOA DRV) unit 12E, a photodiode (PD) 13E, a coupler (CPL) 14E, and a control (CTRL) unit 15E.

The E/O unit 10D, 10E modulates the light output from a light source (not shown) such as a laser diode (LD) with a direct modulation method or an external modulation method and outputs the modulated signal as the signal light. However, the E/O unit 10D, 10E cannot change intensity of output light within the period as short as about 10 ms.

The single wavelength optical transmitter 1 B illustrated in FIG. 1 switches the working transponder 2D and the protection transponder 2E with the optical switch 4A. Since the switching speed of optical switch is set to about 10 ms, switching operation which satisfies the standard W/P switching period may be realized.

Moreover, the single wavelength signal light transmitter should not output signal light to the external side until wavelength and output intensity of the E/O unit 10D, 10E are stabilized. Therefore, the optical switch 4A does not output a signal light until wavelength and output intensity of the E/O unit 10D, 10E are stabilized. When wavelength and output intensity of the E/O unit 10D, 10E are stabilized, the optical switch 4A outputs a signal light from the working transponder 2D.

When a signal light which is increased in intensity within the period as short as about 10 ms is input to an optical amplifier, amplification factor of the optical amplifier is temporarily increased due to inductive radiation. As a result, optical surge is generated in intensity higher than a design value, thereby resulting in adverse effect on the WDM system.

Accordingly, when the optical switch 4A outputs the signal light from the working transponder 2D, optical surge is generated if the optical switch 4A is individually operated. Therefore, light intensity must be controlled to gradually change through interlocked operations of the variable optical attenuators 11D, 11 E and optical switch 4A. Namely, the control units 15D and 15E for controlling the variable optical attenuators must be operated in combination with the control unit 5A for controlling the optical switch.

As the variable optical attenuator used as the variable optical attenuators 11 D and 11 E, a variable optical attenuator using a Faraday rotator is known. See, for example, Japanese Published Unexamined Patent Application No. 1994-51255, which is incorporated herein by reference in its entirety.

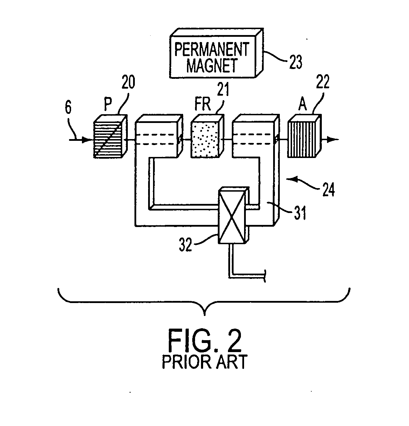

FIG. 2 illustrates a Faraday rotator for use as a variable optical attenuator.

The variable optical attenuator illustrated in FIG. 2 is composed of a polarizer (P) 20, a Faraday rotator (FR) 21 as a magnetic optical crystal, an analyzer (A) 22, a permanent magnet 23 for applying magnetic field to the Faraday rotator 21 and an electromagnet 24 comprising a yoke 31 and a coil 32. A light beam 6 is sequentially supplied to the polarizer 20, Faraday rotator 21 and analyzer 22.

The magnetic field generated by the permanent magnet 23 is applied to the Faraday rotator 21 in the direction perpendicular to the direction of optical beam 6, while the magnetic field generated by the electromagnet 24 is applied to the Faraday rotator 21 in the same direction as the light beam 6.

When the light beam 6 is supplied to the polarizer 20, the linearly polarized light in the same polarizing direction as that of the polarizer 20 is output. This linearly polarized light passes the Faraday rotator 21 and the polarizing direction of the light transmitted through the Faraday rotator 21 is rotated owing to the Faraday effect depending on magnetization vector generated in the direction of light beam 6. The light beam 6 which is rotated in the polarizing direction is then supplied to the analyzer 22.

Since the magnetic field generated by the permanent magnet 23 is sufficiently large enough to provide a single magnetic domain within the Faraday rotator 21, the synthetic magnetic field generated by the permanent magnet 23 and electromagnet 24 is also sufficiently large. Therefore, loss of the light beam 6 within the Faraday rotator 21 due to the existence of many magnetic domains can be significantly reduced.

Intensity of magnetic field of the electromagnet 24 can be varied with a current applied to the coil 32 and therefore direction of a synthetic magnetic field can also be changed. In this case, the polarizing direction of the light beam 6 can be rotated with the Faraday effect with an element (magnetization vector) in the same direction as the light beam 6 among the synthetic magnetic field.

A rotating angle $\theta_F$ due to the Faraday effect in the polarizing direction of the light beam 6 is expressed with the following formula. Formula 1

$$\theta_F = V \times L \times H \tag{1}$$

Here, V is the Verde constant which is determined with material of the Faraday rotator 21. L is the length of optical path in the Faraday rotator 21 and H is the intensity of synthetic magnetic field. When the polarizing direction of the light beam 6 rotated based on the Faraday effect is not matched with the polarizing direction of the analyzer 22, the light beam 6 is partially or entirely shielded by the analyzer 22 and is then attenuated.

Amount of attenuation A of the variable optical attenuator is expressed by the following formula when a relative angle between the polarizing direction of the light rotated on the basis of the Faraday rotator and the polarizing direction of the analyzer is defined as θ.

Formula 2

$$A = 10 \log(\cos^2(90-\theta)+E) + Lo \tag{2}$$

Here, E is light extinction ratio (true value) of optical components forming the variable optical attenuator. Lo is internal loss (dB) of optical components.

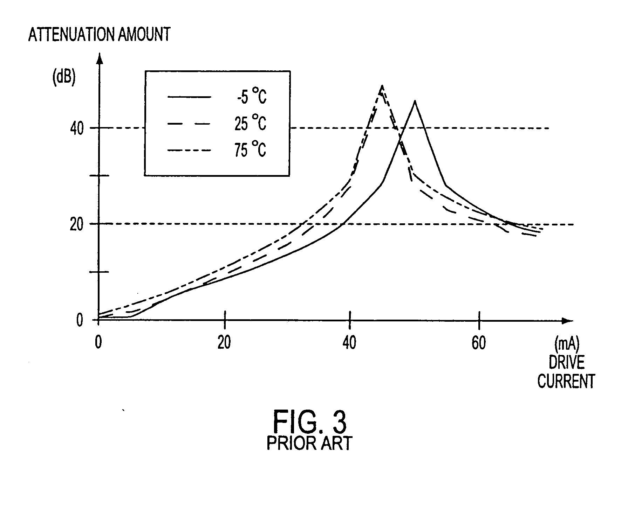

FIG. 3 illustrates change of attenuation amount when a drive current of the variable optical attenuator is changed. As expressed by the formula (2), attenuation amount A of the variable optical attenuator changes depending on the relative angle θ between the polarizing direction of the light rotated on the basis of the Faraday rotator and the polarizing direction of the analyzer, while the amount of rotation $\theta_F$ in the polarizing direction due to the Faraday rotator is changed with the synthetic magnetic field H as expressed by the formula (1). Accordingly, amount of attenuation of the variable optical attenuator can be controlled by changing the magnetic field of the electromagnet 24 to change the synthetic magnetic field with the drive current of the variable optical attenuator.

As illustrated in FIG. 3, attenuation amount of the variable optical attenuator varies depending on the drive current value. However, the drive current value which results in the maximum attenuation amount of the variable optical attenuator changes depending on temperature.

When the variable optical attenuator utilizing the Faraday rotator is used, attenuation amount of the variable optical attenuator changes depending on the drive current value as illustrated in FIG. 3, and the relationship between the drive current and attenuation amount changes depending on temperature. More specifically, the drive current value corresponding to the particular attenuation amount and the drive current value corresponding to the maximum attenuation amount are not constant.

Moreover, as illustrated in FIG. 3, as the drive current is increased before reaching the maximum attenuation amount, the amount of attenuation increases. However, as the drive current is further increased after reaching the maximum attenuation amount, the amount of attenuation decreases. Therefore, as illustrated in FIG. 3, there is a changing direction of attenuation before and after the maximum attenuation amount.

Unfortunately, the maximum amount of attenuation of the variable optical attenuator 11D or 11E cannot be obtained simply by, for example, feeding back the output attained by monitoring the light branched from the PD 13D or 13E of FIG. 1 to the variable optical attenuator drive unit 12D or 12E. Therefore, the output signal light cannot be controlled only with the variable optical attenuator.

SUMMARY OF THE INVENTION

The present invention solves the problems described above.

The present invention provides an optical transmitter including a variable optical attenuator and a controller. The variable optical attenuator attenuates a light to be transmitted from the optical transmitter in accordance with a drive current of the attenuator. The attenuator has an attenuation versus drive current characteristic curve with a peak so that attenuation increases with increasing drive current on a side of the peak ascending to the peak and attenuation decreases with increasing drive current at an opposite side of the peak descending from the peak. The controller monitors the attenuated light and controls the drive current to maintain an attenuation amount near the peak. The attenuator is, for example, a Faraday rotator.

In various embodiment of the present invention, in response to the monitored attenuated light, the controller increases or decreases the drive current by a unit value, wherein the unit value is determined so that the attenuation amount can be maintained near the peak.

Moreover, in various embodiments of the present invention, the unit value can be determined so that the attenuation amount is maintained near the peak without increasing or decreasing the drive current more than, for example, three unit values from the drive current at the peak. However, the present invention is not limited to any specific multiple of the unit value.

Further, in various embodiments of the present invention, the unit value can be determined so that the attenuation amount is maintained within a range of the peak. Such range might be, for example, a 20 dB range related to the attenuation amount at the peak. However, the present invention is not limited to the range being any specific number of dB.

Further, the present invention provides an optical transmitter comprising a Faraday rotator and a controller. The Faraday rotator attenuates a light to be transmitted from the optical transmitter in accordance with a drive current of the Faraday rotator. The Faraday rotator has an attenuation versus drive current characteristic curve with a peak so that attenuation increases with increasing drive current on a side of the peak ascending to the peak and attenuation decreases with increasing drive current at an opposite side of the peak descending from the peak. The controller monitors the attenuated light and increases or decreases the drive current by a unit value in accordance with the monitored attenuated light to maintain an attenuation amount within a range of the attenuation amount at the peak.

The present invention also provides an optical transmitter including a variable optical attenuator attenuating a light to be transmitted from the optical transmitter in accordance with a drive current of the attenuator. The attenuator has an attenuation versus drive current characteristic curve with a peak so that attenuation increases with increasing drive current on a side of the peak ascending to the peak and attenuation decreases with increasing drive current at an opposite side of the peak descending from the peak. The optical transmitter also includes a mechanism for monitoring the attenuated light and controlling the drive current to maintain an attenuation amount near the peak.

Moreover, the present invention provides an optical transmitter comprising a working transponder, a protection transponder and an optical coupler. The working transponder includes a variable optical attenuator attenuating a light, and a controller monitoring the attenuated light and controlling the attenuation of the attenuator in accordance with the monitored light. The protection transponder includes a variable optical attenuator attenuating a light, and a controller monitoring the attenuated light and controlling the attenuation of the attenuator in accordance with the monitored light. The optical coupler couples the attenuated light of the working transponder and the attenuated light of the protection transponder. The coupled light is transmitted from the optical transmitter. The attenuator of the working transponder and/or the protection transponder is, for example, a Faraday rotator.

The present invention provides an optical transmitter including a working transponder producing a light, a protection transponder and an optical coupler. The protection transponder includes a variable optical attenuator attenuating a light, and a controller monitoring the attenuated light and controlling the attenuation of the attenuator in accordance with the monitored light. The optical coupler couples the light produced by the working transponder and the attenuated light of the protection transponder. The coupled light is transmitted from the optical transmitter. The attenuator is, for example, a Faraday rotator.

The present invention further provides an optical transmitter including a working transponder producing a light, a protection transponder and an optical coupler. The protection transponder includes a variable optical attenuator and a controller. The variable optical attenuator attenuates a light in accordance with a drive current of the attenuator. The attenuator has an attenuation versus drive current characteristic curve with a peak so that attenuation increases with increasing drive current on a side of the peak ascending to the peak and attenuation decreases with increasing drive current at an opposite side of the peak descending from the peak. The controller monitors the attenuated light and controls the drive current to maintain an attenuation amount near the peak. The optical coupler couples the light produced by the working transponder and the attenuated light of the protection transponder. The coupled light is transmitted from the optical transmitter. The attenuator is, for example, a Faraday rotator.

Further, according to embodiments of the present invention, when a power level of the light produced by the working transponder is at a normal operating level, the controller of the protection transponder controls the drive current of the attenuator of the protection transponder to maintain the attenuation amount of the attenuator near the peak. When the power level of the light produced by the working transponder falls below the normal operating level, the controller of the protection transponder controls the drive current of the attenuator so that the attenuation amount of the attenuator of the protection transponder is maintain at a constant level below the attenuation amount at the peak.

In addition, the present invention provides an optical transmitter including (a) a light source producing a light; (b) an optical modulator modulating the light; (c) a modulator controller controlling the modulator so that the modulated light is attenuated with respect to the light produced by the light source and is at a target power level; (d) a bias controller monitoring the modulated light, and controlling bias of the optical modulator in accordance with the monitored light; (e) a variable optical attenuator attenuating the modulated light in accordance with a drive current of the attenuator, to thereby produce an attenuated, modulated light, the attenuator having an attenuation versus drive current characteristic curve with a peak so that attenuation increases with increasing drive current on a side of the peak ascending to the peak and attenuation decreases with increasing drive current at an opposite side of the peak descending from the peak; and (f) an attenuator controller monitoring the attenuated, modulated light produced by the attenuator, and controlling the drive current to maintain an attenuation amount near the peak. According to various embodiments of the present invention, the modulator controller and the bias controller operate together to stabilize an output power level of the modulator when the optical transmitter is powered ON. The attenuator is, for example, a Faraday rotator.

BRIEF DESCRIPTION OF THE DRAWINGS

These and other objects and advantages of the invention will become apparent and more readily appreciated from the following description of the preferred embodiments, taken in conjunction with the accompanying drawings of which:

FIG. 1 (prior art) is a diagram illustrating a conventional single wavelength signal light transmitter.

FIG. 2 (prior art) is a diagram illustrating a structure of a variable optical attenuator using a Faraday rotator.

FIG. 3 (prior art) is a diagram illustrating characteristics of the variable optical attenuator in FIG. 2.

FIG. 4 is a diagram illustrating a single wavelength signal light transmitter, according to an embodiment of the present invention.

FIG. 5 is a diagram illustrating characteristic and attenuation amount control of a variable optical attenuator, according to an embodiment of the present invention.

FIG. 6 is a diagram illustrating attenuation amount control of a variable optical attenuator, according to an embodiment of the present invention.

FIGS. 7(a), 7(b), 7(c) are diagrams illustrating changes of signal light intensity transmitted from a transponder, according to an embodiment of the present invention.

FIG. 8 is a diagram illustrating a transponder, according to an embodiment of the present invention.

FIGS. 9(a), 9(b), 9(c) are diagrams illustrating an operation point control of a MZ modulator.

FIGS. 10(a), 10(b) are diagrams illustrating an operation point control of a MZ modulator, according to an embodiment of the present invention.

FIG. 11 is a diagram illustrating control after electrical power of a transponder is turned ON, according to an embodiment of the present invention.

DESCRIPTION OF THE PREFERRED EMBODIMENTS

Reference will now be made in detail to the present preferred embodiments of the present invention, examples of which are illustrated in the accompanying drawings, wherein like reference numerals refer to like elements throughout.

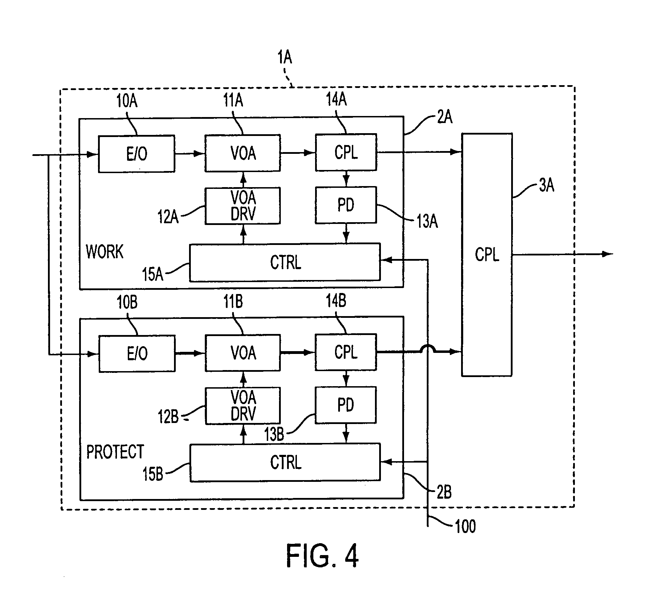

FIG. 4 illustrates a single wavelength signal light transmitter for transmitting signal light of a single channel, according to an embodiment of the present invention. The single wavelength signal light transmitter 1A of FIG. 4 comprises a working transponder 2A, a protection transponder 2B and a coupler 3A.

The working transponder 2A comprises an electric to optical conversion (E/O) unit 10A for outputting an external electric signal as the signal light obtained by modulating the light from the light source, a variable optical attenuator (VOA) 11A for changing intensity of the output light from the E/O 10A, a variable optical attenuator drive unit (VOA DRV) 12A for driving the variable optical attenuator 11A, a photodiode (PD) for monitoring intensity of output light branched by a coupler (CPL) 14A and a control (CTRL) unit 15A.

Similarly, the working transponder 2B comprises an E/O 10B for outputting the external electric signal as the signal light obtained by modulating the light from the light source, a variable optical attenuator (VOA) 11 B for changing intensity of the light output from the E/O 10B, a variable optical attenuator drive (VOA DRV) unit 12B for driving the variable optical attenuator 11 B, a PD 13B for monitoring intensity of output light branched by a coupler (CPL) 14B, and a control (CTRL) unit 15B.

The E/O units 10A and 10B include a light source (not illustrated in FIG. 4) and a modulating mechanism (not illustrated in FIG. 4) to modulate the light from the light source with an external signal.

The variable optical attenuators 11A, 11B attenuate and output the signal lights output from the E/O units 10A, 10B. Amounts of attenuation given by the variable optical attenuators 11A, 11 B change depending on the currents output from the variable optical attenuator drive units 12A, 12B.

The couplers 14A and 14B branch the signal lights output from the variable optical attenuators 11A and 11 B into the light output from the transponders 2A, 2B and the lights input to the PD 13A, 13B. A coupler for use as couplers 14A and 14B might be, for example, a 20:1 coupler.

The control units 15A, 15B monitor an output of the variable optical attenuators 11A and 11 B from the outputs converted to electrical signals with the PDs 13A, 13B and control the current values output to the variable optical attenuators 11A, 11B with the variable optical attenuator drive units 12A, 12B. Since the output signal light intensities of the transponders 2A, 2B are controlled by controlling attenuation amounts of the variable optical attenuators 11A, 11 B, the output signal intensities of the transponders 2A, 2B can be controlled by controlling the control units 15A, 15B from the external side of the transponders 2A, 2B.

The coupler 3A couples outputs of the working transponder 2A and the protection transponder 2B. When one output of the transponders 2A and 2B is controlled, the other output becomes an output of the coupler 3A.

In the present embodiment, attenuators 11A, 11B comprise Faraday rotators having a specific attenuation versus drive current characteristic curve. The single wavelength signal light transmitter 1A controls the attenuation amount of the variable optical attenuators 11A, 11B within an area near to the maximum attenuation point of the attenuation versus drive current characteristic curve. As a result, as will be understood from the description below, the single wavelength signal light transmitter 1A can effectively switch the working and protection facilities within a short period of time.

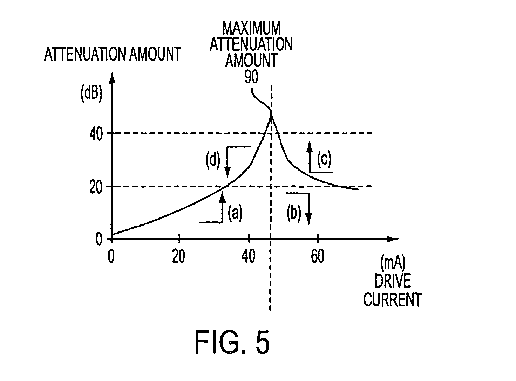

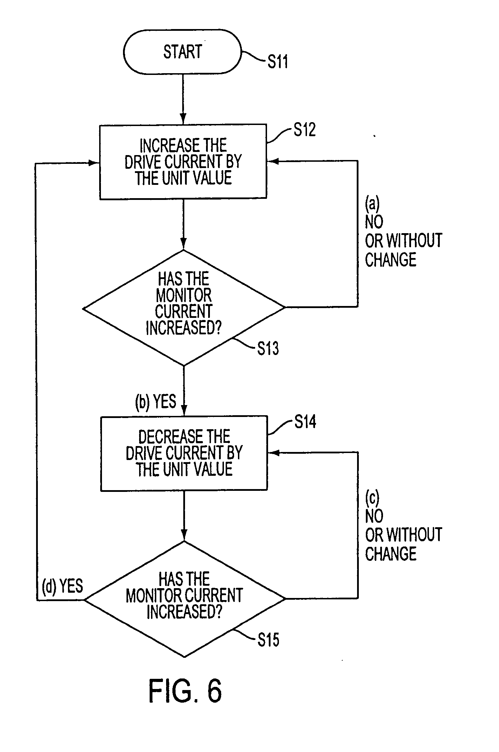

FIGS. 5 and 6 illustrate the control of variable optical attenuators 11A, 11B, according to an embodiment of the present invention.

More specifically, FIG. 5 illustrates an attenuation versus drive current characteristic curve of a variable optical attenuator used in an optical transmitter, according to an embodiment of the present invention. As can be seen from FIG. 5, the attenuation versus drive current characteristic curve has a peak 90. In the example of FIG. 5, the maximum attenuation amount is provided at the peak. As the drive current is increased to reach the peak, the amount of attenuation increases. As the drive current is increased from the drive current at the peak, the attenuation decreases. The attenuation versus drive current characteristic curve thereby provides increasing attenuation with increasing drive current on a side of the peak ascending to the peak and decreasing attenuation with increasing drive current at an opposite side of the peak descending from the peak. The attenuation sharply increases on the ascent, and sharply decreases on the descent. The variable optical attenuator is, for example, a Faraday rotator.

In the specific example of FIG. 5, at peak 90, the drive current is approximately 45 mA, and the attenuation amount is approximately 50 dB. Generally, an attenuation amount of approximately 50 dB is about the limit of a variable optical attenuator. Generally, the example drive current of 45 mA varies in accordance with the surrounding temperature. Of course, the present invention is not limited to any specific values of drive current and/or attenuation amount.

FIG. 6 illustrates control of the variable optical attenuator to be maintained in an area near the maximum attenuation amount, according to an embodiment of the present invention.

In FIG. 6, a drive current of the variable optical attenuator is increased (see operation (S12) in FIG. 6) or decreased (see operation (S14) in FIG. 6) by a unit value. The amount of the unit value is set so that the attenuation amount converges to a value near the maximum attenuation amount in FIG. 5. The determination of the amount of the unit value will be discussed further below.

Referring now to FIGS. 5 and 6, the process starts in operation (S11) of FIG. 6. From operation (S11), the process moves to operation (S12), where a drive current of the variable optical attenuator is increased by the unit value. An increase of drive current by the unit value in operation (S12) indicates a shift to the right on the drive current axis of FIG. 5.

From operation (S12), the process moves to operation (S13), where it is determined whether the monitor current has increased.

When a monitor current has not increased (that is, the monitor drive current has been reduced or did not change) in operation (S13), this indicates that the attenuation amount of the variable optical attenuator increased or did not change. In other words, the drive current is determined to be lower than the drive current value resulting in the maximum attenuation amount in FIG. 5. In this situation, the process returns from operation (S13) to operation (S12), and the drive current is again increased by the unit value. Accordingly, as indicated by reference "(a)" in FIG. 5, a point on the curve in the graph of FIG. 5 is shifted to the upper side or is shifted only in the horizontal direction.

When the monitor current does not vary in the operation (S13), this event may be assumed to be resulting from the situation in which the drive current value has shifted to the point in the graph of FIG. 5 resulting in the identical value of attenuation amount on the opposite side of the maximum attenuation amount. This situation can occur because of the specific value being used as the unit value, or because the change of attenuation amount cannot be read from the change of monitor current.

When the drive current value has shifted to the point resulting in the identical value of attenuation amount on the opposite side of the maximum attenuation amount, the drive current is larger than the drive current value resulting in the maximum attenuation amount. But when the process shifts to operation (S12) for increasing the drive current by the unit value, the reduction of attenuation value is monitored in the next shift of the drive current and this drive current is correctly determined to be larger than the drive current value resulting in the maximum attenuation amount.

Therefore, the increase/decrease unit value of the drive current should be determined to satisfy the above described minimum reference value (for example, 30 dB in this case). In this situation, when the attenuation amount at the area near to the maximum attenuation amount of the variable optical attenuator is sufficiently larger than the minimum reference value, even if the drive current is increased or decreased as much as several unit values from the drive current value resulting in the maximum attenuation amount, a problem will not occur. More specifically, in this situation, a problem will not occur even when the process shifts to the operation (S12) to increase again the drive current by the unit value.

As an example, the unit value might be determined so that the attenuation amount is maintained near the maximum attenuation amount without increasing or decreasing the drive current more than, for example, three unit values from the drive current at the maximum attenuation amount. An appropriate number of unit values can be determined based on design considerations. Moreover, as an example, the number of unit might be determined so that the attenuation amount is maintained within range above and below the maximum attenuation amount.

Alternatively, the unit value might be determined so that the attenuation amount is maintained within a range of the maximum attenuation amount. Such range might be, for example, a 20 dB range related to the maximum attenuation amount. However, the present invention is not limited to the range being any specific number of dB.

When change of attenuation amount due to the increase of drive current by the unit value cannot be read from a change of the monitor current, this indicates that the attenuation amount of the variable optical attenuator is sufficiently larger than the minimum reference value. Accordingly, when the unit value of increase/decrease of the drive current is within the range of adequate value as in the case where the drive current value shifts to the point resulting in the identical attenuation amount on opposite sides of the maximum attenuation amount, a problem does not occur when the process shifts to operation (S12) to increase again the drive current by the unit value.

Therefore, when the monitor current is decreased by increasing the drive current by the unit value or does not change, while the increase/decrease unit of the drive current is in the range of adequate value, the process shifts to operation (S12) to increase again the drive current by the unit value. As a result, the drive current comes near to the drive current value resulting in the maximum attenuation amount or the sufficient attenuation value is maintained even after the process has shifted to the operation (S12).

When a monitor current has increased in operation (S13), this indicates that an attenuation amount of the variable optical attenuator has decreased. As a result, the drive current is determined to be larger than the drive current value which results in the maximum attenuation amount. In this situation, from operation (S13) in FIG. 6, the process moves to operation (S14).

In operation (S14), the drive current is reduced by the unit value. The reduction of the drive current by the unit value in operation (S14) indicates a shift to the left on the drive current axis of the graph of FIG. 5. As a result, the drive current becomes near to the drive current value which results in the maximum attenuation amount. Accordingly, as indicated by reference "(b)" in FIG. 5, a point on the curve in the graph of FIG. 5 is shifted lower.

From operation (S14), the process moves to operation (S15), where it is determined whether the monitor current has increased. Operation (S15) is identical to operation (S13).

In operation (S15), when it is determined that the monitor current increased, this indicates a reduction of the attenuation amount of the variable optical attenuator. Therefore, the drive current is determined to be smaller than the drive current value resulting in the maximum attenuation amount, and the process shifts to the operation (S12) to increase the drive current by the unit value. As a result, the drive current comes near to the drive current value resulting in the maximum attenuation amount. Accordingly, as indicated by reference "(d)" in FIG. 5, a point on the curve in the graph of FIG. 5 is shifted to the lower side.

In operation (S15), when it is determined that the monitor current has not increased (that is, the monitor current is reduced or did not change), this indicates that the attenuation amount of the variable optical attenuator has increased or did not change. Therefore, the drive current is determined to be larger than the drive current value resulting in the maximum attenuation amount. As a result, the process returns to operation (S14) to again reduce the drive current by the unit value. Accordingly, as indicated by reference "(c)" in FIG. 5, a point on the curve in the graph of FIG. 5 is shifted to the upper side or shifts only in the horizontal direction. Therefore, when the increase/decrease unit of the drive current is adequate, the process shifts from operation (S15) to operation (S14) to reduce again the drive current by the unit value. As a result, the drive current comes near to the drive current value resulting in the maximum attenuation amount or sufficient attenuation amount is maintained even after the process shifts to operation (S14).

Accordingly, when the attenuation amount is near to the maximum attenuation amount of the variable optical attenuator and is sufficiently larger than the minimum reference value (30 dB in this example), and the increase/decrease unit of the drive current is determined to satisfy the above- described minimum reference value, even if the drive current is increased or decreased by several unit values from the drive current value resulting in the maximum attenuation amount, the attenuation amount of variable optical attenuator can always be controlled to the value near to the maximum attenuation amount with the control method described above.

Moreover, with the control process described above, it is possible to obtain the maximum attenuation amount, whether the current drive current value is larger or smaller than the drive current value resulting in the maximum attenuation amount. In the case where attenuation amount of the variable optical attenuator is controlled to the target attenuation value, the drive current value can be controlled within the region where it becomes smaller than the drive current value resulting in the maximum attenuation amount. That is, in the region where attenuation amount increases when the drive current increases, attenuation amount of the variable optical attenuator can be controlled to the target attenuation amount with a simplified control method such as automatic level control (ALC).

Therefore, as described above, a variable optical attenuator, such as a Faraday rotator, has an attenuation versus drive current characteristic curve as in FIG. 5. With this characteristic curve, as the drive current is increased before reaching the maximum attenuation amount, the amount of attenuation increases. However, as the drive current is further increased after reaching the maximum attenuation amount, the amount of attenuation decreases. Therefore, as illustrated in FIG. 5, there is a changing direction of attenuation before and after the maximum attenuation amount. The present invention recognizes that the variable attenuator has a very fast response time if it is controlled to always provide attenuation near the maximum attenuation amount, and by providing an appropriate unit value for increasing/decreasing the drive current.

The maximum attenuation amount of the characteristic curve of FIG. 5 may sometimes be referred to herein as an optimal attenuation amount. Accordingly, the drive current is controlled by using an appropriate unit value for increasing/decreasing the drive current so that the attenuation amount provided by the variable optical attenuator is maintained near this optimal attenuation amount.

FIG. 5 shows the maximum attenuation amount as being peak in the attenuation versus drive current characteristic curve. Moreover, this peak is the only peak in the characteristic curve. However, the present invention is not limited to a characteristic curve having only peak. Instead, the present invention would be applicable to a characteristic curve having more than one peak. Moreover, if a characteristic curve had more than one peak, the present invention is not limited to controlling the attenuation amount to be near the peak with the maximum attenuation. Instead, an appropriate peak should be selected based on design considerations, and the drive current should be controlled so that the attenuation amount provided by the variable optical attenuator is maintained near the attenuation amount provided by the selected peak. Accordingly, the present invention can take advantage of quick changes in attenuation amount in reverse directions on opposite sides of the selected peak.

Therefore, the present invention is not limited to a variable optical attenuator providing the specific characteristic curve shape or specific values in FIG. 5. Many variations are possible. Instead, the present invention takes advantages of the quick changes in attenuation amount in reverse directions on opposite sides of a peak in the curve.

Next, operations of the single wavelength signal light transmitter 1A will be described.

Referring again to FIG. 4, the single wavelength signal light transmitter 1A couples outputs of the working transponder 2A and protection transponder 2B and outputs the coupled signals.

Under the ordinary operating conditions, attenuation amount of the variable optical attenuator 11A of the working transponder 2A is controlled with the control unit 15A to provide intensity required from the external side. Such required intensity might be, for example, the signal light intensity required when the signal light of a plurality of wavelengths is multiplexed (i.e., the signal light intensity of a wavelength divisional multiplexed (WDM) signal light), or a pre-emphasized signal light intensity. Meanwhile, the variable optical attenuator 11 B of the protection transponder 2B is controlled to continuously provide the attenuation amount near a peak, such as the maximum attenuation amount, in the characteristic curve in FIG. 5, and as described, for example, in FIG. 6.

Therefore, in the present embodiment, the working transponder 2A outputs the signal light of the intensity required from the external side, while the protection transponder 2B provides controlled output in accordance with FIG. 6. The single wavelength signal light transmitter 1A couples these outputs with the coupler 3A, and thereby outputs the coupled lights.

The control units 15A, 15B monitor outputs of the variable optical attenuators 11A, 11 B from the outputs converted to electrical signals with the PDs 13A, 13B, and control the current values output to the variable optical attenuators 11A, 11 B from the variable optical attenuator drive units 12A, 12B. Since the output signal light intensities of the transponders 2A, 2B are controlled by controlling the attenuation amounts of the variable optical attenuators 11A, 11 B, the output signal light intensities of the transponders 2A, 2B are controlled by controlling the control units 15A, 15B from the external side of the transponders 2A, 2B by, for example, at least one communication line 100 (see FIG. 4).

Next, switching operations of the working/ protection (W/P) systems of the single wavelength signal light transmitter 1A in FIG. 4 will be described.

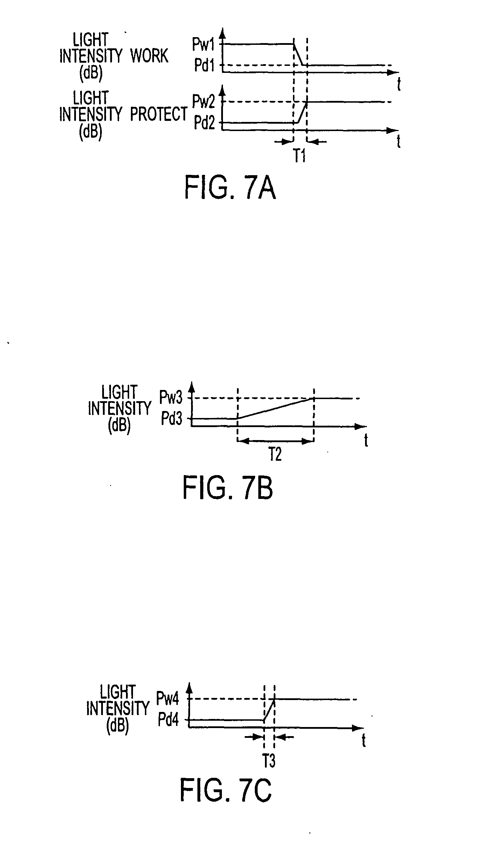

FIG. 7(a) illustrates changes with time of output lights of the working transponder 2A and protection transponder 2B in the switching operation of the working and protection systems. In the switching operation in FIG. 7(a), it is assumed that an output light intensity of the working transponder 2A changes to Pd1 from Pw1, while an output light intensity of the protection transponder 2B changes to Pw2 from Pd2, and the time required for switching to the protection transponder from the working transponder is T1.

Since the signal light transmitted from the single wavelength signal light transmitter 1A is obtained by coupling the outputs of the working transponder 2A and protection transponder 2B, values of Pd1 and Pd2 must be smaller than a light intensity (for example, -30 dBm) corresponding to no signal being output.

When the output light intensity of the working transponder 2A is lowered with a reason such as, for example, failure of E/O unit 10A, an output light intensity of the single wavelength signal light transmitter 1A is also lowered. In view of preventing continuous reduction of output light intensity of the single wavelength signal light transmitter 1A, the W/P switching operation is performed to control an output of the working transponder 2A and provide an output of the protection transponder 2B as the ordinary output.

More specifically, when the output light intensity of the working transponder 2A is lowered, the protection transponder 2B shifts, as illustrated in FIG. 7(a), to the condition for providing the ordinary output intensity of Pw2 from the condition for providing the controlled output intensity of Pd2. Since the output light intensity change of the protection transponder 2B is realized by change of the drive current of the variable optical attenuator 11 B, a switching time T1 of about 10 ms can be obtained by utilizing a Faraday rotator as the variable optical attenuator.

Accordingly, a single wavelength signal light transmitter based on the present embodiment can realize the W/P switching operation within 10 ms without use of an optical switch.

As indicated above, output of a transponder 2A, 2B can be changed to an ordinary output condition from a controlled output condition depending on the control of the attenuation amount of the variable optical attenuators. Therefore, the output light intensity of a transponder can be gradually increased to Pw3 from Pd3, as illustrated in FIG. 7(b), by taking sufficient time required for prevention of optical surge.

Therefore, according to embodiments of the present invention as in FIGS. 4-7, an optical transmitter includes a working transponder producing a light, a protection transponder and an optical coupler. The protection transponder includes a variable optical attenuator and a controller. The variable optical attenuator attenuates a light in accordance with a drive current of the attenuator. The attenuator has an attenuation versus drive current characteristic curve with a peak so that attenuation increases with increasing drive current on a side of the peak ascending to the peak and attenuation decreases with increasing drive current at an opposite side of the peak descending from the peak. The controller monitors the attenuated light and controls the drive current to maintain an attenuation amount near the peak. The optical coupler couples the light produced by the working transponder and the attenuated light of the protection transponder. The coupled light is transmitted from the optical transmitter. The attenuator is, for example, a Faraday rotator.

Further, according to embodiments of the present invention, when a power level of the light produced by the working transponder is at a normal operating level, the controller of the protection transponder controls the drive current of the attenuator of the protection transponder to maintain the attenuation amount of the attenuator near the peak. When the power level of the light produced by the working transponder falls below the normal operating level, the controller of the protection transponder controls the drive current of the attenuator so that the attenuation amount of the attenuator of the protection transponder is maintain at a constant level below the attenuation amount at the peak.

Control of a variable optical attenuator in accordance with the operations in FIG. 6 is based on monitoring the output of the PD 13A. As illustrated in FIG. 4, the light input to the PD 13A is attenuated with the variable optical attenuator 11A and branched with the coupler 14A. Therefore, as the attenuation amount becomes higher, detection of intensity becomes more difficult.

Accordingly, it is also possible that a filter be provided between the PD 13A and the control unit 15A in order to detect a minute output of the PD 13A. With this approach, an intensity range of signal light controlled by the PD 13A and control unit 15A is widened by eliminating a noise included in the output signal of the PD 13A. As a result, appropriate control can be realized, even in the region where attenuation amount of the variable optical attenuator is large.

In the above described embodiments of the present invention, an attenuation amount of the variable optical attenuator 11A is controlled to be near a peak, or maximum, of an attenuation versus drive current characteristic curve of the variable optical attenuator 11A. Moreover, intensity of the signal light output from the E/O unit 10A is controlled to be high enough to indicate when the signal light is not being output. The variable optical attenuator 11A is controlled on the basis of the monitoring output of the light branched by the PD 13A. But, since the light to be input to the PD 13A is attenuated with the variable optical attenuator 11A and branched with the coupler 14A, when attenuation amount increases, detection of light intensity becomes difficult.

Moreover, in some situations, intensity of the signal light output from the E/O unit 10A (that is, intensity of the signal light input to the variable optical attenuator 11A) is not always intensive while, at the same time, attenuation amount of the variable optical attenuator 11A is high. As a result, an output of the transponder cannot always be controlled simply by monitoring output of the light branched by the PD 13A.

A transponder, such as the transponders 2A and 2B in FIG. 4, can have difficulty in controlling the signal light at certain times such as, for example, at the time of starting operation. Difficulty can occur since, at the time of starting operation, intensity of light input to the variable optical attenuators 11A, 11B is not sufficiently high, and it is difficult to control the attenuation amount of the variable optical attenuator 11A, 11 B to be, for example, near to a peak or maximum value in the characteristic curve of FIG. 5.

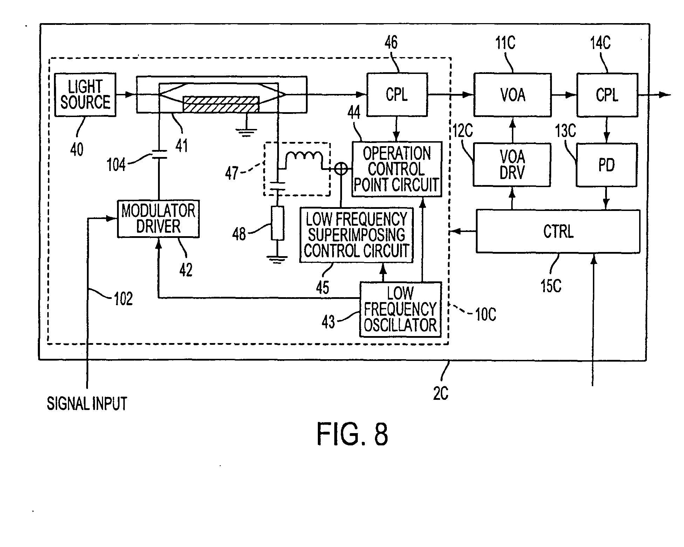

Therefore, FIG. 8 is a diagram illustrating a transponder 2C according to an additional embodiment of the present invention. The transponder 2C in FIG. 8 controls an output thereof to the value equal to or lower than a specified value, for example, even at the time of starting operation.

In the embodiment of FIG. 8, intensity of the light output from the transponder 2C can be controlled by introducing the output intensity control of a Mach-Zehnder (MZ) modulator 41 of the E/O unit 10C, in addition to the attenuation amount control by the variable optical attenuator 11 C.

In FIG. 8, the transponder 2C comprises an E/O unit 10C for outputting an external electrical signal as the signal light obtained by modulating light from a light source 40, a variable optical attenuator (VOA) 11C for changing a light intensity of the output light from the E/O unit 10C, a variable optical attenuator drive (VOA DRV) unit 12C for driving the variable optical attenuator 11C, a photodiode (PD) 13C for monitoring intensity of output light branched by the coupler (CPL) 14C, and a control (CTRL) unit 15C.

The E/O unit 10C comprises the light source 40, the MZ modulator 41 for modulating an output light from the light source 40, a modulator driver 42 for inputting a low frequency signal output from a low frequency oscillator 43 and a transmission object signal 102 and providing an output to a modulation input terminal of the MZ modulator 41 via a capacitor 104, a coupler (CPL) 46 for branching output of the MZ modulator 41, an operation point control circuit 44 for inputting the branched light from the coupler 46 and the low frequency signal output from the low frequency signal oscillator 43 and outputting a bias voltage of the MZ modulator 41 on the basis of the low frequency element superimposed to the branched light, a low frequency superimposing control circuit 45 for inputting the low frequency signal output from the low frequency signal oscillator 43 and superimposing the low frequency signal to an output of the operation point control circuit 44, a bias tee 47 for inputting the outputs of the operation point control circuit 44 and low frequency superimposing control circuit 45 to the other modulation input terminal of the MZ modulator 41, and a termination resistor 48. The specific configuration in FIG. 8 is only intended as an example configuration, and many modifications are possible.

The variable optical attenuator 11 C attenuates the signal light output from the E/O unit 10C and outputs an attenuated signal light. Attenuation amount of the variable optical attenuator 11 C changes depending on the current output from the variable optical attenuator drive unit 12C.

The coupler 14C branches the signal light output from the variable optical attenuator 11C into the light output from the transponder 2C and the light to be input to the PD 13C. For example, a 20:1 coupler is used as this coupler.

The control unit 15C monitors an output of the variable optical attenuator 11 C from the output converted to the electrical signal by the PD 13C and controls a current value output from the variable optical attenuator 11 C with the variable optical attenuator drive unit 12C. Moreover, the control unit 15C controls an output of the MZ modulator 41 through a control mechanism (not illustrated) of the E/O 10C.

The MZ modulator 41 modulates the light output from the light source 40 with a voltage appearing at the modulation input terminal. As the light source 40, a semiconductor laser, for example, is used. The MZ modulator 41 does not generate any variation of wavelength (chirping) in the output signal light. However, the bias control to compensate for variation of operation point due to temperature change and change by aging is important to assure stable operation of the MZ modulator 41 for a longer period of time.

Here, an example bias control method of the MZ modulator 41 will be described.

As the bias control method of the MZ modulator 41, the method disclosed by the Japanese Published Unexamined Patent Application No. 1991-251815 is known, in which the bias voltage is controlled by superimposing a low frequency signal to an input signal and monitoring the low frequency signal element of the signal light.

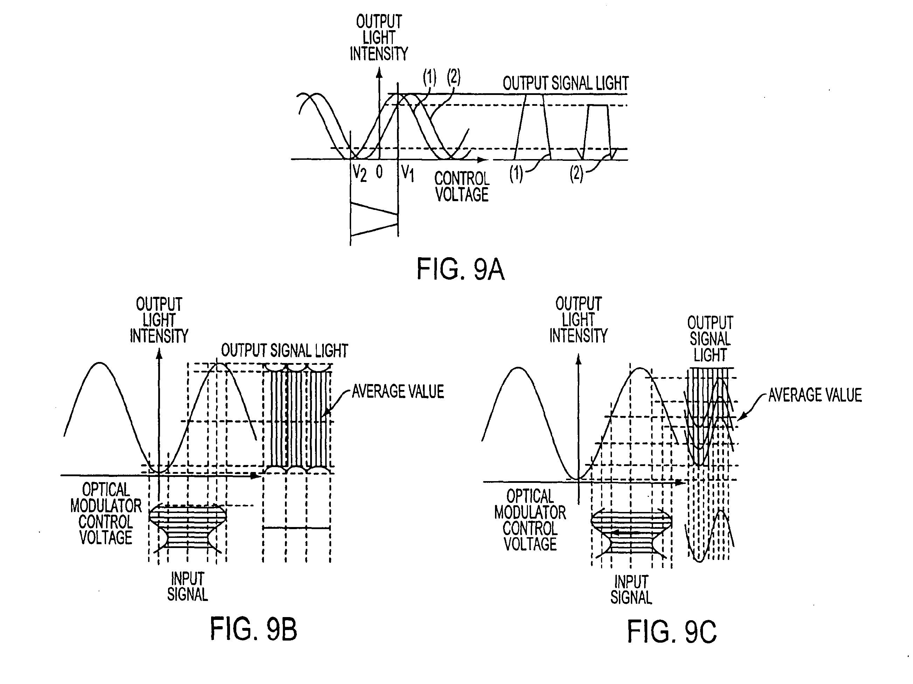

FIG. 9(a) illustrates input/output characteristic curves of the MZ modulator 41 and the relationship between the modulation input signal and output light. In FIG. 9(a), the input/output characteristic of the MZ modulator 41, namely output light intensity for the control voltage, has the periodical characteristic. When a voltage difference of the control voltage from the peak to the bottom of the input/output characteristic of the MZ modulator 41 is defined as $V_{TT}$, the output signal lights corresponding to the maximum and minimum output light intensities of the MZ modulator 41 can be obtained by utilizing the drive voltages $V_o$ and $V_1$ so that each logical value of the input signal corresponds to the peak value of the input/output characteristic as illustrated in (1) of FIG. 9(a). As a result, effective binary modulation can be realized.

Meanwhile, under the condition (2) of FIG. 9(a) where the drive voltage drifts from the optimum point, an extinction ratio of the output signal light is deteriorated from the condition (1) of FIG. 9(a) depending on the characteristic of the MZ modulator 41.

In the method of controlling the bias voltage by superimposing a low frequency signal to the input signal and then monitoring the low frequency element of the output signal light, it is considered that the low frequency element included in the output signal light is different, when the low frequency signal is superimposed to the input signal due to the relationship between the input signal and the control voltage of the MZ modulator 41.

When the bias voltage has the optimum value as illustrated in FIG. 9(b), since the input signal is modulated with the peak and bottom portions of the input/output characteristic curves of the MZ modulator 41, intensity of the output signal light appears as the element of frequency 2f. Moreover, since the low frequency element of frequency 2f is revered in the phase for the output light corresponding to each logical value of the input signal, an average value of the output signal light illustrated in FIG. 9(b) does not include the low frequency element of frequency f.

On the other hand, when the bias voltage does not have adequate value as illustrated in FIG. 9(c), since the input signal is modulated with the part other than the peak and bottom portions of the input/output characteristic curves of the MZ modulator 41, the average value of the output signal light includes the low frequency element of frequency f.

The bias voltage can be controlled to the optimum voltage, for example, by inputting and amplifying for the operation the original low frequency signal source and the monitoring output of the output signal light and then inputting these signals to the modulation input terminal of the MZ modulator 41 under the condition that the bias voltage is varied depending on the low frequency element of frequency f to be monitored with the output signal light of the modulator by utilizing the characteristic described above.

Next, bias control of the MZ modulator 41 will be described.

A low frequency signal from the low frequency superimposing control circuit 45, in addition to the signal from the operation point control circuit 44 for providing an output depending on the low frequency element of frequency f monitored with the output signal light of the modulator, is input to the modulation input terminal of the MZ modulator 41 for low frequency modulation of the single side of input signal amplitude. Accordingly, if the signal light is not input to the modulator driver 42, the MZ modulator 41 provides an output by adding a constant loss to the output light of the light source 40.

A low frequency oscillator 43 outputs a low frequency signal to be used for the bias control of the MZ modulator 41. The frequency of low frequency signal is sufficiently lower than the frequency of the input signal. The modulator driver 42 executes amplitude modulation of the input signal with the low frequency signal and then inputs the modulated signal to a modulation input terminal of the MZ modulator 41 via a capacitor.

The coupler 46 branches the signal light output from the MZ modulator 41 into the light output from the E/O unit 10C and the light to be input to the operation point control circuit 44. As the coupler 46, a 20:1 coupler, for example, is used.

The operation point control circuit 44 inputs the light branched from the coupler 46 and the low frequency signal from the low frequency oscillator 43 and outputs the signal for compensating bias voltage change of the MZ modulator 41 using the signal converted to the electrical signal from the branched light and the low frequency signal.

The low frequency superimposing control circuit 45 inputs the low frequency signal from the low frequency oscillator 43, superimposes the low frequency signal to an output of the operation point control circuit 44 and then inputs the superimposed signal to the modulation input terminal of the MZ modulator 41. Accordingly, since the low frequency modulation of one side of the output amplitude of the modulator driver 42 of the input signal amplitude is cancelled, the signal which is modulated by low frequency signal only in other side is input to the MZ modulator 41, and thereby the light which varies as the low frequency signal only in one side is output.

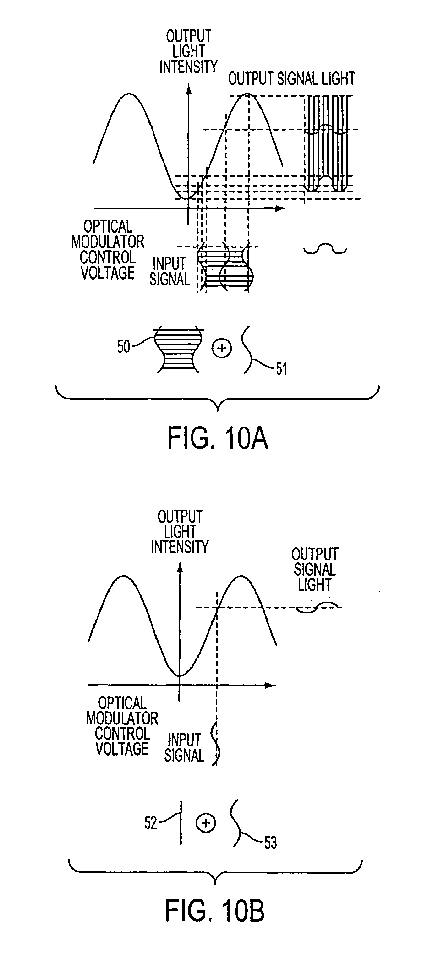

FIGS. 10(a) and 10(b) illustrate bias control of the MZ modulator 41. FIG. 10(a) illustrates the bias control in the ordinary operation. The low frequency signal output from the low frequency oscillator 43, the output 50 from the modulator driver 42 to which the transmission object signal is input and the output 51 obtained by superimposing, with the low frequency superimposing control circuit 45, the low frequency signal to the output of the operation point control circuit 44 are input to the modulation input terminal of the MZ modulator 41. Accordingly, the input signal of the MZ modulator 41 is cancelled in the low frequency modulation in one side of the amplitude thereof and the low frequency element of the frequency f or 2f appears in the part corresponding to the logical value in one side as the output light signal. Moreover, since the low frequency element of the frequency f or 2f also appears in the average value of the output signal light, the bias control of the logical value in one side can be realized.

Moreover, since the signal which is modulated with low frequency signal only in the part corresponding to the other logical value can be input to the MZ modulator by varying the phase of low frequency signal output from the low frequency superimposing control circuit 45, the bias control can be realized for respective logical values.

When the transmission object signal to be input to the modulation driver 42 is cancelled here, the low frequency element is not included in the output 52 of the modulator driver 42 as illustrated in FIG. 10(b). Since the output 52 of the modulator driver 42 and the output 53 obtained by superimposing the low frequency signal, with the low frequency superimposing control circuit 45, to the output of the operation point control circuit 44 are input to the modulation input terminal of the MZ modulator 41, only the low frequency signal is input to the MZ modulator 41.

Since the operation point control circuit 44 performs bias control of the MZ modulator 41 so that the low frequency element of frequency f is not included in the output signal light, the biasing point is controlled to be located in the bottom part of the input/output characteristic curves of the MZ modulator under the condition that the transmission object signal to be input to the modulator driver 42 is cancelled.

Accordingly, intensity of light output from the MZ modulator 41 is lowered corresponding to the bottom part of the input/output characteristic curves. Therefore, the light input from the light source 40 is given a certain amount of loss.

Next, operations of the transponder 2C of FIG. 8 will be described.

Output intensity of the transponder 2C during the normal operation is controlled with the control method described above for the embodiment in FIG. 4.

Meanwhile, when intensity of light input to the variable optical attenuator 11C may not be sufficiently high, for example, when the operation is started. As a result, at the time the operation is started, it is often difficult to control the attenuation amount of the variable optical attenuator 11 C. Therefore, an output of the transponder 2C is controlled with a method which is different from that used under the normal operating condition.

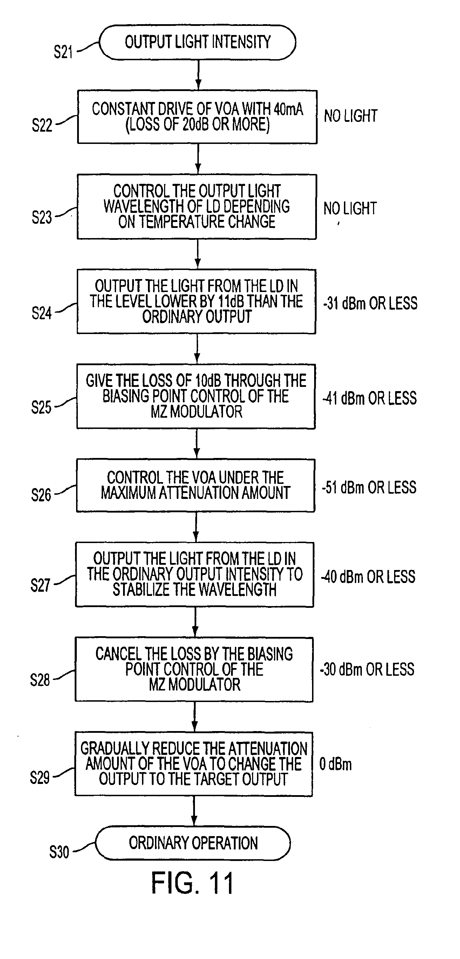

FIG. 11 is a process illustrating operations until the normal condition is entered, according to an embodiment of the present invention. In FIG. 11, an output of the transponder 2C is controlled until an output of the E/O unit 10C (that is, an output of the light source 40 and modulator 41) is stabilized after the electrical power is turned ON, and then the output is changed to the target signal light intensity (0 dBm, in this case). In the operations of FIG. 11, a laser diode (LD) is used as an example of the light source 40.

The process starts in operation (S21) when the electrical power is turned ON.

From operation (S21), the process moves to operation (S22), where the variable optical attenuator (VOA) 11 C is driven with the drive current of, for example, 40 mA. Since the light source 40 does not provide an output when the operation is started, the light is not input to the variable optical attenuator 11 C and it is therefore impossible to realize the control using a monitor output of the PD 13C.

However, as illustrated in FIG. 3, attenuation amount of the variable optical attenuator 11C changes depending on temperature, and the minimum attenuation amount for the particular current value can be obtained by estimating the maximum changing amount of the attenuation amount due to change of characteristic. Accordingly, minimum loss rate of 20 dB can be obtained by setting the drive current of the variable optical attenuator 11 C to 40 mA. Since the light is not input to the variable optical attenuator 11 C, the light is not transmitted from the outputs of the variable optical attenuator 11 C and transponder 2C.

From operation (S22), the process moves to operation (S23), where output light wavelength of the light source 40 is controlled in accordance with the wavelength of the signal light output from the transponder 2C by changing temperature of the light source. Since the light is not output from the light source 40 in operation S22, the light is not output from the transponder 2C.

From operation (S23), the process moves to operation (S24) where, after the output wavelength of the light source 40 is controlled to the target wavelength, output light intensity of the light source 40 is set to the value which is smaller than the ordinary output light intensity. As an example, the output light intensity can be set to the value which is lower by 11 dB from the ordinary output light intensity. Since the minimum attenuation amount of 20 dB can be obtained (S22) in the variable optical attenuator 11 C, the output light intensity of the transponder 2C is set to the value which is lower by 31 dB than the target output, for example, to -31 dBm or less. When the output light intensity of the transponder is -30 dBm or less, it is allowed as the condition wherein the light is not output from the transponder. Accordingly, the condition where the transponder 2C does not output the light can be maintained until the operation S24.

From operation (S24), the process moves to operation (S25), where a loss of 10 dB can be given by controlling the bias point of the MZ modulator 41 through application of the low frequency signal from the low frequency superimposing control circuit 45. Accordingly, output light intensity can be set to -41 dBm or less, and it does not exceed -30 dBm even when the drive current is increased/decreased as much as unit value during the process of searching for the optimum point of attenuation amount illustrated in FIG. 6.

From operation (S25), the process moves to operation (S26), where attenuation amount of the variable optical attenuator 11 C is set to the maximum attenuation amount by introducing the process of searching for the optimum point of attenuation amount illustrated in FIG. 6. Although the maximum attenuation amount of the variable optical attenuator 11C is larger than 40 dB, since intensity of light input to the variable optical attenuator 11 C is smaller than that in the ordinary condition by 21 dB, the attenuation amount of the variable optical attenuator under the control of FIG. 6 is estimated here as 30 dB or more. In operation (S26), the output light intensity of the transponder 2C can be set to -51 dBm or less.

From operation (S26), the process moves to operation (S27), where an output of the light source 40 is set to the ordinary output light intensity. When a current flowing into the light source is increased in order to change the output light intensity of the light source, temperature of the light source also changes and thereby wavelength of the light output from the light source also changes. The light source is controlled to stabilize wavelength of the light output from the light source under the condition that the output light intensity of the light source is set to the ordinary output light intensity. Since the output light intensity of the light source 40 is increased up to the ordinary output light intensity from the value which is lower by 11 dB than the ordinary output light intensity, the output light intensity of transponder 2C is set to -40 dBm or less in operation (S27).

From operation (S27), the process moves to operation (S28), where the bias point of the MZ modulator 41 is controlled, the operating condition is returned to the ordinary condition from that resulting in the loss of 10 dB, and the signal light is output through the modulation. Accordingly, the transponder enters the condition for controlling the output by setting, under the normal operating condition, the attenuation amount of the variable optical attenuator to the value near to the optimum point.

Here, since the intensity of light input to the variable optical attenuator is increased, in the operations (S27) and (S28), exceeding the level in the operation (S26), attenuation amount can also be increased through the control of the variable optical attenuator of FIG. 6.

From operation (S28), the process moves to operation (S29). An output of the E/O unit (that is, outputs of the light source 40 and modulator 41) are stabilized with the operations prior to operation (S29). Therefore, in operation (S29), the output light intensity of the transponder is varied to the target signal light intensity (0 dBm, in this case). When the output light intensity is to be changed, attenuation amount of the variable optical attenuator is gradually decreased in order to prevent optical surge as in the case of the embodiment in FIG. 4, and the signal light intensity is also gradually increased as illustrated in FIG. 7(b).

From operation (S29), the operation ends in operation (S30).

The numerical values in FIG. 11 are only intended as examples. The present invention is not limited to these numerical values. Moreover, the specific operations in FIG. 11 are only intended as examples, and various modifications are possible.

According to the transponder of the present embodiment, the output signal light intensity can be controlled to the controlled output condition and to the desired intensity condition, as described above, through the interlocked control of the variable optical attenuator 11 C and MZ modulator 41 not only in the normal operating condition but also in the condition when the electrical power is turned ON. Moreover, the single wavelength signal light transmitter, which can control the output signal light intensity to the controlled output condition and to the condition of desired intensity not only in the normal operating condition but also in the condition when the electrical power is turned ON, can be constituted by using the transponder 2C of FIG. 8 as the transponders 2A, 2B of FIG. 4.

Moreover, with a signal light transmitter utilizing the transponder of FIG. 8, even when intensity of input light of the variable optical attenuator is insufficient and the attenuation amount cannot be controlled sufficiently by monitoring an output of the variable optical attenuator, an output from the light source can be attenuated for the constant amount due to the bias voltage control of the modulator and an output of the signal light transmitter can appropriately controlled.

Further, with the transponder 2C in FIG. 8, an optical output can be suppressed until output of the E/O unit 10C is stabilized, by combining the bias point controls of the variable optical attenuator 11C and the MZ modulator 41.

Therefore, according to embodiments of the present invention as in FIGS. 8-11, an optical transmitter includes (a) a light source producing a light; (b) an optical modulator modulating the light; (c) a modulator controller controlling the modulator so that the modulated light is attenuated with respect to the light produced by the light source and is at a target power level; (d) a bias controller monitoring the modulated light, and controlling bias of the optical modulator in accordance with the monitored light; (e) a variable optical attenuator attenuating the modulated light in accordance with a drive current of the attenuator, to thereby produce an attenuated, modulated light, the attenuator having an attenuation versus drive current characteristic curve with a peak so that attenuation increases with increasing drive current on a side of the peak ascending to the peak and attenuation decreases with increasing drive current at an opposite side of the peak descending from the peak; and (f) an attenuator controller monitoring the attenuated, modulated light produced by the attenuator, and controlling the drive current to maintain an attenuation amount near the peak. According to various embodiments of the present invention, the modulator controller and the bias controller operate together to stabilize an output power level of the modulator when the optical transmitter is powered ON. The attenuator is, for example, a Faraday rotator.

The signal light transmitter of FIG. 4 comprises a variable optical attenuator and a control unit. As described above, the control unit monitors an output of the variable optical attenuator and controls the attenuation amount on the basis of the monitored output. The present invention allows the signal light transmitter to continuously and quickly change from a condition in which no signal light is being output, to a condition in which signal light of a desired intensity is being output.

As described above, the present invention provides a transponder and a single wavelength signal light transmitter for controlling signal light without use of an optical switch.

The present invention provides sufficient attenuation amount even when an attenuation rate of the variable optical attenuator varies depending on temperature. Moreover, the present invention provides the optimum value for the drive current. An attenuation amount of the variable optical attenuator using a Faraday rotator varies depending on the relative angle between the polarizing direction of the light rotated by the Faraday rotator and the polarizing direction of the analyzer. Moreover, rotation amount of the polarizing direction due to the Faraday rotator varies depending on the magnetic field of the electromagnet generated by the drive current. Accordingly, attenuation rate of the variable optical attenuator becomes optimum at the particular drive current. Since an output of the signal light transmitter can be controlled with the variable optical attenuator by controlling the drive current of the variable optical attenuator in the signal light transmitter to provide the optimum value of the attenuation amount, the apparatus can be constituted easily.

Various detailed specific configurations and numerical examples are described herein. However, the present invention is not limited to the specific configurations and numerical examples, and variations are possible.

Therefore, it should be understood that, although a few preferred embodiments of the present invention have been shown and described, it would be appreciated by those skilled in the art that changes may be made in these embodiments without departing from the principles and spirit of the invention.

**Claims**

1. An optical transmitter comprising:

   a variable optical attenuator attenuating a light to be transmitted from the optical transmitter in accordance with a drive current of the attenuator, the attenuator having an attenuation versus drive current characteristic curve with a peak so that attenuation increases with increasing drive current on a side of the peak ascending to the peak and attenuation decreases with increasing drive current at an opposite side of the peak descending from the peak; and
   a controller monitoring the attenuated light and controlling the drive current to maintain an attenuation amount near the peak.

2. An apparatus as in claim 1, wherein, in response to the monitored attenuated light, the controller increases or decreases the drive current by a unit value, the unit value being determined so that the attenuation amount can be maintained near the peak.

3. An apparatus as in claim 2, wherein the unit value is determined so that the attenuation amount is maintained near the peak without increasing or decreasing the drive current more than three unit values from the drive current at the peak.

4. An apparatus as in claim 2, wherein the unit value is determined so that the attenuation amount is maintained within a range of the peak.

5. An apparatus as in claim 1, wherein the attenuator is a Faraday rotator.

6. An optical transmitter comprising:

   a Faraday rotator attenuating a light to be transmitted from the optical transmitter in accordance with a drive current of the Faraday rotator, the Faraday rotator having an attenuation versus drive current characteristic curve with a peak so that attenuation increases with increasing drive current on a side of the peak ascending to the peak and attenuation decreases with increasing drive current at an opposite side of the peak descending from the peak; and
   a controller monitoring the attenuated light and increasing or decreasing the drive current by a unit value in accordance with the monitored attenuated light to maintain an attenuation amount within a range of the attenuation amount at the peak.

7. An optical transmitter comprising:

   a variable optical attenuator attenuating a light to be transmitted from the optical transmitter in accordance with a drive current of the attenuator, the attenuator having an attenuation versus drive current characteristic curve with a peak so that attenuation increases with increasing drive current on a side of the peak ascending to the peak and attenuation decreases with increasing drive current at an opposite side of the peak descending from the peak; and
means for monitoring the attenuated light and controlling the drive current to maintain an attenuation amount near the peak.

8. An optical transmitter comprising:

a working transponder including

a variable optical attenuator attenuating a light, and
a controller monitoring the attenuated light, and controlling the attenuation of the attenuator in accordance with the monitored light;

a protection transponder including

a variable optical attenuator attenuating a light, and
a controller monitoring the attenuated light and controlling the attenuation of the attenuator in accordance with the monitored light; and

an optical coupler coupling the attenuated light of the working transponder and the attenuated light of the protection transponder, wherein the coupled light is transmitted from the optical transmitter.

9. An optical transmitter as in claim 8, wherein the attenuator of at least one of the working transponder and the protection transponder is a Faraday rotator.

10. An optical transmitter as in claim 8, wherein the attenuator of the protection transponder is a Faraday rotator.

11. An optical transmitter as in claim 8, wherein

the attenuator of at least one of the working transponder and the protection transponder attenuates light in accordance with a drive current of the attenuator, the attenuator having an attenuation versus drive current characteristic curve with a peak so that attenuation increases with increasing drive current on a side of the peak ascending to the peak and attenuation decreases with increasing drive current at an opposite side of the peak descending from the peak, and
the controller monitors the attenuated light and controls the drive current to maintain an attenuation amount near the peak.

12. An optical transmitter as in claim 8, wherein

the attenuator of the protection transponder attenuates light in accordance with a drive current of the attenuator, the attenuator having an attenuation versus drive current characteristic curve with a peak so that attenuation increases with increasing drive current on a side of the peak ascending to the peak and attenuation decreases with increasing drive current at an opposite side of the peak descending from the peak, and
the controller of the protection transponder monitors the attenuated light and controls the drive current to maintain an attenuation amount near the peak.

13. An optical transmitter as in claim 12, wherein the attenuator of the protection transponder is a Faraday rotator.

14. An optical transmitter comprising:

a working transponder producing a light;
a protection transponder including

a variable optical attenuator attenuating a light, and
a controller monitoring the attenuated light and controlling the attenuation of the attenuator in accordance with the monitored light; and

an optical coupler coupling the light produced by the working transponder and the attenuated light of the protection transponder, wherein the coupled light is transmitted from the optical transmitter.

15. An optical transmitter as in claim 14, wherein the attenuator is a Faraday rotator.

16. An optical transmitter as in claim 14, wherein

the attenuator attenuates light in accordance with a drive current of the attenuator, the attenuator having an attenuation versus drive current characteristic curve with a peak so that attenuation increases with increasing drive current on a side of the peak ascending to the peak and attenuation decreases with increasing drive current at an opposite side of the peak descending from the peak, and
the controller controls the drive current to maintain an attenuation amount near the peak.

17. An optical transmitter comprising:

a working transponder producing a light;
a protection transponder including

a variable optical attenuator attenuating a light in accordance with a drive current of the attenuator, the attenuator having an attenuation versus drive current characteristic curve with a peak so that attenuation increases with increasing drive current on a side of the peak ascending to the peak and attenuation decreases with increasing drive current at an opposite side of the peak descending from the peak, and a controller monitoring the attenuated light and controlling the drive current to maintain an attenuation amount near the peak; and

an optical coupler coupling the light produced by the working transponder and the attenuated light of the protection transponder, wherein the coupled light is transmitted from the optical transmitter.

18. An optical transmitter as in claim 17, wherein the attenuator is a Faraday rotator.

19. An optical transmitter as in claim 17, wherein,

when a power level of the light produced by the working transponder is at a normal operating level, the controller controls the drive current of the attenuator to maintain the attenuation amount of the attenuator near the peak, and when the power level of the light produced by the working transponder falls below the normal operating level, the controller controls the drive current of the attenuator so that the attenuation amount of the attenuator is maintain at a constant level below the attenuation amount at the peak.

20. An optical transmitter as in claim 19, wherein the attenuator is a Faraday rotator.

21. An optical transmitter as in claim 17, wherein the controller comprises:

means for, when a power level of the light produced by the working transponder is at a normal operating level, controlling the drive current of the attenuator to maintain the attenuation amount of the attenuator near the peak, and means for, when the power level of the light produced by the working transponder falls below the normal operating level, controlling the drive current of the attenuator so that the attenuation amount of the attenuator is maintain at a constant level below the attenuation amount at the peak.

22. An optical transmitter comprising:

a light source producing a light; an optical modulator modulating the light; a modulator controller controlling the modulator so that the modulated light is attenuated with respect to the light produced by the light source and is at a target power level; a bias controller monitoring the modulated light, and controlling bias of the optical modulator in accordance with the monitored light; a variable optical attenuator attenuating the modulated light in accordance with a drive current of the attenuator, to thereby produce an attenuated, modulated light, the attenuator having an attenuation versus drive current characteristic curve with a peak so that attenuation increases with increasing drive current on a side of the peak ascending to the peak and attenuation decreases with increasing drive current at an opposite side of the peak descending from the peak; and an attenuator controller monitoring the attenuated, modulated light produced by the attenuator, and controlling the drive current to maintain an attenuation amount near the peak.

23. An optical transmitter as in claim 22, wherein the modulator controller and the bias controller operate together to stabilize an output power level of the modulator when the optical transmitter is powered ON.

24. An optical transmitter as in claim 22, wherein the attenuator is a Faraday rotator.

25. An optical transmitter as in claim 23, wherein the attenuator is a Faraday rotator.

26. An optical transmitter comprising:

a light source producing a light; an optical modulator modulating the light; means for controlling the modulator so that the modulated light is attenuated with respect to the light produced by the light source and is at a target power level; means for monitoring the modulated light, and for controlling bias of the optical modulator in accordance with the monitored light; a variable optical attenuator attenuating the modulated light in accordance with a drive current of the attenuator, to thereby produce an attenuated, modulated light, the attenuator having an attenuation versus drive current characteristic curve with a peak so that attenuation increases with increasing drive current on a side of the peak ascending to the peak and attenuation decreases with increasing drive current at an opposite side of the peak descending from the peak; and
means for monitoring the attenuated, modulated light produced by the attenuator, and for controlling the drive current to maintain an attenuation amount near the peak.

27. An optical transmitter as in claim 26, wherein the attenuator is a Faraday rotator.

FIG. 1
PRIOR ART

FIG. 2
PRIOR ART

FIG. 3
PRIOR ART

FIG. 4

FIG. 5

START ─ S11

INCREASE THE DRIVE CURRENT BY THE UNIT VALUE ─ S12

(a)
NO
OR WITHOUT
CHANGE

HAS THE MONITOR CURRENT INCREASED? ─ S13

(b) YES

DECREASE THE DRIVE CURRENT BY THE UNIT VALUE ─ S14

(c)
NO
OR WITHOUT
CHANGE

(d) YES

HAS THE MONITOR CURRENT INCREASED? ─ S15

FIG. 6

EP 1 484 851 A1

LIGHT
INTENSITY WORK
(dB)

Pw1
Pd1

t

LIGHT
INTENSITY PROTECT
(dB)

Pw2
Pd2

t

T1

## FIG. 7A

LIGHT
INTENSITY
(dB)

Pw3
Pd3

t

T2

## FIG. 7B

LIGHT
INTENSITY
(dB)

Pw4
Pd4

t

T3

## FIG. 7C

FIG. 8

FIG. 9A

OUTPUT LIGHT INTENSITY

OUTPUT SIGNAL LIGHT

(1) (2)

(1)

(2)

$V_2$ 0 $V_1$

CONTROL VOLTAGE

FIG. 9B

OUTPUT LIGHT INTENSITY

OUTPUT SIGNAL LIGHT

AVERAGE VALUE

OPTICAL MODULATOR CONTROL VOLTAGE

INPUT SIGNAL

FIG. 9C

OUTPUT LIGHT INTENSITY

OUTPUT SIGNAL LIGHT

AVERAGE VALUE

OPTICAL MODULATOR CONTROL VOLTAGE

INPUT SIGNAL

OUTPUT
LIGHT
INTENSITY

OUTPUT SIGNAL LIGHT

OPTICAL
MODULATOR
CONTROL
VOLTAGE

INPUT
SIGNAL

50 ⊕ 51

## FIG. 10A

OUTPUT
LIGHT
INTENSITY

OUTPUT
SIGNAL
LIGHT

OPTICAL
MODULATOR
CONTROL
VOLTAGE

INPUT
SIGNAL

52 ⊕ 53

## FIG. 10B

S21 — ( OUTPUT LIGHT INTENSITY )

S22 — CONSTANT DRIVE OF VOA WITH 40mA
(LOSS OF 20dB OR MORE) — NO LIGHT

S23 — CONTROL THE OUTPUT LIGHT
WAVELENGTH OF LD DEPENDING
ON TEMPERATURE CHANGE — NO LIGHT

S24 — OUTPUT THE LIGHT FROM THE LD IN
THE LEVEL LOWER BY 11dB THAN THE
ORDINARY OUTPUT — -31 dBm OR LESS

S25 — GIVE THE LOSS OF 10dB THROUGH THE
BIASING POINT CONTROL OF THE
MZ MODULATOR — -41 dBm OR LESS

S26 — CONTROL THE VOA UNDER THE
MAXIMUM ATTENUATION AMOUNT — -51 dBm OR LESS

S27 — OUTPUT THE LIGHT FROM THE LD IN
THE ORDINARY OUTPUT INTENSITY TO
STABILIZE THE WAVELENGTH — -40 dBm OR LESS

S28 — CANCEL THE LOSS BY THE BIASING
POINT CONTROL OF THE
MZ MODULATOR — -30 dBm OR LESS

S29 — GRADUALLY REDUCE THE ATTENUATION
AMOUNT OF THE VOA TO CHANGE THE
OUTPUT TO THE TARGET OUTPUT — 0 dBm

S30 — ( ORDINARY OPERATION )

FIG. 11

**European Patent Office**

**EUROPEAN SEARCH REPORT**

Application Number

EP 04 01 2397

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 384 957 B1 (IKEDA SEIICHI ET AL) 7 May 2002 (2002-05-07) * column 10, line 66 - column 11, line 10 * * column 14, line 36 - line 50 * * figures 5,6 * | 1,5,7, 22-27 | H04B10/00 G02F1/01 G02F1/09 |
| Y | | 2-4,6, 11,12, 16-21 | |
| X | US 3 579 145 A (LANGE OWEN E DE) 18 May 1971 (1971-05-18) * column 2, line 52 - column 3, line 14 * * column 5, line 10 - line 39 * * figures 1,2 * | 1,5,7 | |
| Y | US 6 028 697 A (LEE DO-HYUNG) 22 February 2000 (2000-02-22) * column 6, line 20 - column 7, line 51 * * figure 5B * | 2-4,6 | |
| X | EP 0 838 913 A (NORTHERN TELECOM LTD) 29 April 1998 (1998-04-29) * column 6, line 19 - column 8, line 41 * * figures 2,6 * | 8-10, 13-15 | TECHNICAL FIELDS SEARCHED (Int.Cl.7) G02F H04B |
| Y | | 11,12, 16-21 | |
| A | WO 02/091029 A (MAHON CATHAL ; DORSAL NETWORKS INC (US); ESMAN RONALD DALE (US); FEINB) 14 November 2002 (2002-11-14) * paragraph [0018] - paragraph [0020] * * paragraph [0024] * * figures 1A,1B * | 8-21 | |

-/--

The present search report has been drawn up for all claims

| Place of search | Date of completion of the search | Examiner |
|---|---|---|
| Munich | 12 August 2004 | Girardin, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 04 01 2397

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 6 345 142 B1 (KAWARAI MASASHIGE ET AL) 5 February 2002 (2002-02-05) * column 3, line 44 - line 58 * * column 7, line 13 - column 8, line 44 * * figures 7,10 * | 1-27 | |

|  |  |  | TECHNICAL FIELDS SEARCHED (Int.Cl.7) |
|---|---|---|---|

The present search report has been drawn up for all claims

| Place of search | Date of completion of the search | Examiner |
|---|---|---|
| Munich | 12 August 2004 | Girardin, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 01 2397

This annex lists the patent family members relating to the patent documents cited in the above-mentioned European search report.
The members are as contained in the European Patent Office EDP file on
The European Patent Office is in no way liable for these particulars which are merely given for the purpose of information.

12-08-2004

| Patent document cited in search report | | Publication date | Patent family member(s) | | Publication date |
|---|---|---|---|---|---|
| US 6384957 | B1 | 07-05-2002 | JP | 2001249313 A | 14-09-2001 |
| US 3579145 | A | 18-05-1971 | NONE | | |
| US 6028697 | A | 22-02-2000 | KR | 210913 B1 | 15-07-1999 |
| | | | CN | 1181647 A ,B | 13-05-1998 |
| | | | DE | 19733365 A1 | 12-02-1998 |
| | | | FR | 2752067 A1 | 06-02-1998 |
| | | | GB | 2315939 A ,B | 11-02-1998 |
| | | | JP | 3178661 B2 | 25-06-2001 |
| | | | JP | 10075002 A | 17-03-1998 |
| | | | RU | 2146069 C1 | 27-02-2000 |
| EP 0838913 | A | 29-04-1998 | US | 6031647 A | 29-02-2000 |
| | | | EP | 0838913 A2 | 29-04-1998 |
| | | | JP | 10215019 A | 11-08-1998 |
| | | | US | 6268945 B1 | 31-07-2001 |
| WO 02091029 | A | 14-11-2002 | US | 2002167694 A1 | 14-11-2002 |
| | | | WO | 02091029 A2 | 14-11-2002 |
| | | | US | 2004105136 A1 | 03-06-2004 |
| | | | US | 2003185562 A1 | 02-10-2003 |
| US 6345142 | B1 | 05-02-2002 | CN | 1264049 A | 23-08-2000 |
| | | | JP | 2000305057 A | 02-11-2000 |
| | | | KR | 2000056996 A | 15-09-2000 |

EPO FORM P0459

For more details about this annex : see Official Journal of the European Patent Office, No. 12/82